# EUROPÄISCHE PATENTSCHRIFT

(11) **EP 1 133 107 B1**
(45) Veröffentlichungstag und Bekanntmachung des Hinweises auf die Patenterteilung: **16.11.2005**
(21) Anmeldenummer: 01104343.7
(22) Anmeldetag: 23.02.2001
(51) Int. Cl.: H04L 12/43, B60R 16/02

(54) **Verfahren zur Datenübertragung in einem Kommunikationsnetzwerk mit Ringstruktur**
Method of data transmission in a communication network with ring structure
Procédé de communication de données dans un système de communication avec structure en anneau

(30) Priorität: 10.03.2000 DE 10011330
(43) Veröffentlichungstag der Anmeldung: 12.09.2001
(73) Patentinhaber: BECKER GmbH, D-76307 Karlsbad (DE)
(72) Erfinder: Stiegler, Andreas, Dipl.-Ing., 76275 Ettlingen (DE); Schöpp, Harald, Dipl.-Ing., 76275 Ettlingen (DE); Bähren, Frank, Dipl.-Ing., 76133 Karlsruhe (DE)
(74) Vertreter: Patentanwälte Westphal, Mussgnug & Partner

(56) Entgegenhaltungen:
- WO-A-98/36533
- GB-A- 2 201 566
- HECK P ET AL: "MEDIA ORIENTED SYNCHRONOUS TRANSFER - A NETWORK PROTOCOL FOR HIGH QUALITY, LOW COST TRANSFER OF SYNCHRONOUS, ASYNCHRONOUS, AND CONTROL DATA ON FIBER OPTIC" PREPRINTS OF PAPERS PRESENTED AT THE AES CONVENTION, XX, XX, Bd. 4551, Nr. 4551, September 1997 (1997-09), Seiten 1-10,5PAGES, XP001121596

## Beschreibung

Die Erfindung betrifft ein Verfahren zur gemeinsamen Datenübertragung von digitalen Quell- und Steuerdaten zwischen Datenquellen und Datensenken, die Teilnehmer eines unidirektional betriebenen Kommunikationsnetzwerkes mit Ringstruktur sind.

Verfahren dieser Art werden heute überall dort eingesetzt, wo verschiedenartige elektronische und elektrische Geräte, die zum Zwecke der Datenkommunikation untereinander Informationen austauschen sollen, in teilweise komplizierter Weise mittels Daten- und Steuerleitungen miteinander verbunden sind. So kann beispielsweise im Audiobereich die Datenkommunikation zwischen miteinander vernetzten Datenquellen einerseits - zum Beispiel CD-Spieler, Radioempfänger, Kassettenrecorder, Mikrophone - und den damit verbundenen Datensenken andererseits - beispielsweise Verstärker-Lautsprecher-Kombinationen - durch ein oben beschriebenes Verfahren gesteuert werden.

Die verschiedenartigen Netzteilnehmer eines solchen Kommunikationsnetzwerkes sind mit Datenleitungen in einer Weise miteinander verbunden, dass der Datenstrom nacheinander jeden der Teilnehmer des Kommunikationsnetzwerkes passiert. Es entsteht dann ein Kommunikationsnetzwerk mit Ringstruktur mit besonderen Vorteilen insbesondere für mobile Anwendungen, beispielsweise bei Verwendung in einem Kraftfahrzeug, oder bei Anwendung im Haushalt, beispielsweise einem Multimedianetzwerk. Die für das oben genannte Verfahren typische Datenübertragung ermöglicht eine einfache Verbindung von Datenquellen und Datensenkten, die typischerweise kontinuierlich Daten senden bzw. empfangen. Die Datenübertragung erfolgt zumeist synchronen zu einem Taktsignal, da die heutigen Qualitätsanforderungen, beispielsweise im Automobilbereich, im Allgemeinen nur bei synchroner Datenübertragung mit akzeptablem Aufwand erfüllt werden können.

Bei vielen Kommunikationsnetzwerken weisen dessen Netzteilnehmer dieselbe Abtastfrequenz sowie dieselbe Datenbreite wie das Kommunikationsnetzwerk selbst auf. Bei der Datenübertragung stellt ein als Datenquelle fungierender Teilnehmer abgetastete Daten bereit und überträgt diese in Form einer Bitgruppe auf ein entsprechendes Datenfeld des Kommunikationsnetzwerkes. Ein adressierter Netzteilnehmer kann anschließend diese soeben gesendete Bitgruppe über das Kommunikationsnetzwerk auslesen.

An viele Kommunikationsnetzwerke mit Ringstruktur wird jedoch zunehmend die Anforderung gestellt, dass deren Abtastfrequenz sehr viel größer ist als die jeweilige Abtastfrequenz der Netzteilnehmer. Ein solches Kommunikationsnetzwerk ist das sogenannte MOST-Netzwerk (Media Oriented Synchronous Tranceiver Network), das insbesondere im Automobilbereich Verwendung findet und das typischerweise ein ganzzahliges Vielfaches der Abtastfrequenz der angeschlossenen Teilnehmer aufweist. Jeweils ein Netzteilnehmer mit niedriger Abtastfrequenz transferiert hier Daten auf das MOST-Netzwerk. Die Auslastung des Kommunikationsnetzwerk beträgt in diesem Fall nur maximal ein dem Bruchteil entsprechenden Anteil seiner maximalen Datenübertragungskapazität.

Aus Heck et al. "MEDIA ORIENTED SYNCHRONOUS TRANSFER - A NETWORK PROTOKOL FOR HIGH QUALITY, LOW COST TRANSFER OF SYNCHRONOUS, ASYNCHRONOUS, AND CONTROL DATA ON FIBER OP-TIC",PREPRINTS OF PAPERS PRESENTED AT THE AES CONVENTION, XX, XX, Bd. 4551, Nr. 4551, September 1997 (1997-09), Seiten 1 bis 10, ist ein Verfahren zur gemeinsamen Datenübertragung von digitalen Quell- und Steuerdaten zwischen Datenquellen und Datensenken in einem unidirektional betriebenen Kommunikationsnetzwerk mit Ringstruktur bekannt. Dabei werden die Quell- und Steuerdaten in einem Format übertragen, das eine getaktete Folge von einzelnen Bitgruppen gleicher Bitbreite vorschreibt, die in einem kontinuierlichen Datenstrom übertragen werden. In den einzelnen Bitgruppen sind jeweils bestimmte, durch das Format vorgegebene Bitpositionen reserviert (Frame Structure). Die als Teilnehmer des Netzwerkes dienenden Datenquellen und Datensenken tasten jeweils mit einer ersten Abtastfrequenz ab, während das Kommunikationsnetzwerk die Daten mit einer zweiten Abtastfrequenz überträgt, wobei die zweite Abtastfrequenz ein ganzzeiliges Vielfaches der ersten Abtastfrequenz ist. Innerhalb jeder Bitgruppe ist mindestens ein zusammenhängender Bereich mit einer vorgegebenen Anzahl von Bitpositionen für Quelledaten reserviert und die zusammenhängenden Bereiche sind jeweils einem Teilnehmer zugeordnet.

Aus der WO 98 36533 A ist es bekannt, bei einem ringförmigen Netz, das eine synchrone, isochrone und asynchrone Datenübertragung von Quell- als auch Steuerdaten ermöglicht, die Netzteilnehmer mit Hilfe eines gesetzten Bits zu Anfang einer periodisch wiederkehrenden Struktur von Bitgruppen wiederfinden zu können, wobei ein zusätzliches Bit hierfür vorgesehen ist.

Eine ähnliche Kennzeichnung von Frames ist zudem auch aus der GB 2 201 566 A bekannt. Auch hier wird auf eine zusätzliches Identifizierungsmittel in Form eines Headersignals zurückgegriffen. Nachteilig bei den bekannten Systemen ist, dass entweder nur ein Teilnehmer übertragen kann, dessen Übertragungsrate die Übertragungsrate des Systems bestimmt (Heck at al.) oder aber eine Übertragung mehrerer Teilnehmer gleichzeitig zwar möglich ist, jedoch zusätzliche Identifizierungsbits benötigt werden (WO 98 36533 A und GB 2 201 566 A). Beide Methoden sind allerdings im Hinblick auf eine fest vorgegebene Datenbreite und unterschiedlichen Abtastraten von Teilnehmen und Netzwerk bei bestehenden Systemen schwer zu integrieren.

Der vorliegenden Erfindung liegt daher die Aufgabe zugrunde, ein Verfahren zur gemeinsamen Datenübertragung von digitalen Quell- und Steuerdaten zwischen Datenquellen und Datensenken, die Teilnehmer eines unidirektional betriebenen Kommunikationsnetzwerkes mit Ringstruktur sind, bereitzustellen, das eine effizientere Auslastung der Datenübertragungskapazität zulässt.

Erfindungsgemäß wird diese Aufgabe durch ein Verfahren zur Datenübertragung mit den Merkmalen des Patentanspruchs 1 gelöst, das heißt durch ein gattungsgemäßes Verfahren,
bei dem Quell- und Steuerdaten in einem Format übertragen werden, das eine getaktete Folge von einzelnen Bitgruppen gleicher Bitbreite vorschreibt, die in einem kontinuierlichen Datenstrom übertragen werden, wobei jeweils bestimmte, durch das Format vorgegebene Bitpositionen innerhalb einer jeden Bitgruppe reserviert sind,
bei dem die Teilnehmer Daten jeweils mit einer ersten Abtastfrequenz bereitstellen und das Kommunikationsnetzwerk Daten mit einer zweiten Abtastfrequenz, die ein ganzzahliges Vielfaches der ersten Abtastfrequenz ist, überträgt,
bei dem innerhalb jeder Bitgruppe mindestens ein zusammenhängender Bereich mit einer vorgegebenen Anzahl von Bitpositionen für Quelldaten reserviert ist und der/die zusammenhängenden Bereich(e) jeweils einen Anfang und eine definierte Länge aufweisen und jeweils einem Teilnehmer zugeordnet sind,
bei dem Teilnehmer sich bei der Benutzung des zusammenhängenden Bereichs (23) zyklisch abwechseln und mindestens einem zusammenhängenden Bereich innerhalb einer Bitgruppe jeweils eine signifikante Bitposition zugeordnet ist, die bei einem der Teilnehmer auf einen ersten logischen Pegel gesetzt wird und bei allen übrigen Teilnehmern auf einen entgegengesetzten, zweiten logischen Pegel gesetzt wird.

Mit der vorliegende Erfindung ist es möglich, eine höhere Effizienz bei der Datenübertragung zu bewirken, indem gewährleistet werden kann, dass theoretisch sämtliche am Kommunikationsnetzwerk angeschlossene Teilnehmer gleichzeitig Daten über das Kommunikationsnetzwerk übertragen können. In diesem Fall kann das Kommunikationsnetzwerk sehr effektiv ausgelastet werden.

Die vorliegende Erfindung eignet sich insbesondere für ein Kommunikationsnetzwerk, bei dem die Abtastfrequenz der angeschlossenen Teilnehmer mit der Abtastfrequenz des Netzwerkes synchronisiert ist. Es wäre selbstverständlich auch denkbar, dass diese Abtastfrequenzen nicht miteinander synchronisiert sind, sondern die zweite Abtastfrequenz eine beliebige Phasenverschiebung gegenüber der ersten Abtastfrequenz aufweist. Diese beliebige Phasenverschiebung, die z. B. 10% der Schwingungsdauer der zweiten Abtastfrequenz betragen kann, gewährleistet eine höhere Flexibilität bei der Datenübertragung. In diesem Fall sollte jedoch der die Daten empfangende Teilnehmer, beispielsweise ein Transceiver, Mittel zur Datenpufferung aufweisen.

Die nachfolgende Beschreibung des erfindungsgemäßen Verfahrens wurde anhand eines speziell ausgestalteten Kommunikationsnetzwerkes, nämlich einem MOST-Netzwerk mit vier bzw. acht angeschlossenen Teilnehmern, die jeweils eine viermal so geringe Abtastfrequenz wie die Abtastfrequenz des Kommunikationsnetzwerkes aufweisen, beschrieben. Vorteilhafterweise können an dem Kommunikationsnetzwerk auch eine beliebige Anzahl der oben genannten Teilnehmer angeschlossen sein. Darüber hinaus kann die Abtastfrequenz des Kommunikationsnetzwerkes vorteilhafterweise auch ein beliebiges Vielfaches der Abtastfrequenz der angeschlossenen Teilnehmer aufweisen.

In einer vorteilhaften Ausgestaltung ist ein signifikantes Bit vorgesehen, welches einen signifikanten Teilnehmer des Kommunikationsnetzwerkes definiert, wodurch aufgrund der ringartigen Struktur des Kommuniktationsnetzwerkes sämtliche anderen Teilnehmer ebenfalls eindeutig bestimmt sind. Dieses signifikante Bit ist im vorliegenden Ausführungsbeispiel als LSB-Bit ausgebildet, kann jedoch auch als beliebig andere Bitposition ausgebildet sein.
Das Kommunikationsnetzwerk eignet sich besonders vorteilhaft zur Datenübertragung von Audiosignalen, da insbesondere hier die effiziente Ausnutzung des Kommunikationsnetzwerkes auf Kosten einer einzelnen Bitposition vorzuziehen ist. Der Verlust dieser einzelnen Bitposition kann insbesondere bei Audiosignalen verschmerzt werden, da es hier nur zu einer geringfügigen Einbuße der Qualität der ausgelesenen Daten kommt.

Das erfindungsgemäße Verfahren eignet sich besonders vorteilhaft in einem als MOST-Netzwerk ausgebildeten Kommunikationsnetzwerk, das typischerweise in einem Kraftfahrzeug oder auch im Haushalt verwendet wird.

Weitere vorteilhafte Ausgestaltungen und Weiterbildungen der Erfindung sind den Unteransprüchen, der folgenden Beschreibung und den Figuren entnehmbar.

Die Erfindung wird nachfolgend anhand der in den Figuren der Zeichnung angegebenen Ausführungsbeispiele näher erläutert. Es zeigt dabei:
- Fig. 1: ein ringförmiges Kommunikationsnetzwerk mit vier Netzteilnehmern;
- Fig. 2: das für das erfindungsgemäße Verfahren verwendete Datenübertragungsformat in einem ringförmigen Kommunikationsnetzwerk;
- Fig. 3: schematisch die Datenübertragung bei vier Netzteilnehmern mittels eines Kommunikationsnetzwerkes mit vierfacher Abtastfrequenz;
- Fig. 4: schematisch die Datenübertragung bei acht Netzwerkteilnehmern mittels eines Kommunikationsnetzwerkes mit vierfacher Abtastfrequenz.

In allen Figuren der Zeichnung sind gleiche bzw. funktionsgleiche Elemente mit gleichen Bezugszeichen versehen worden.

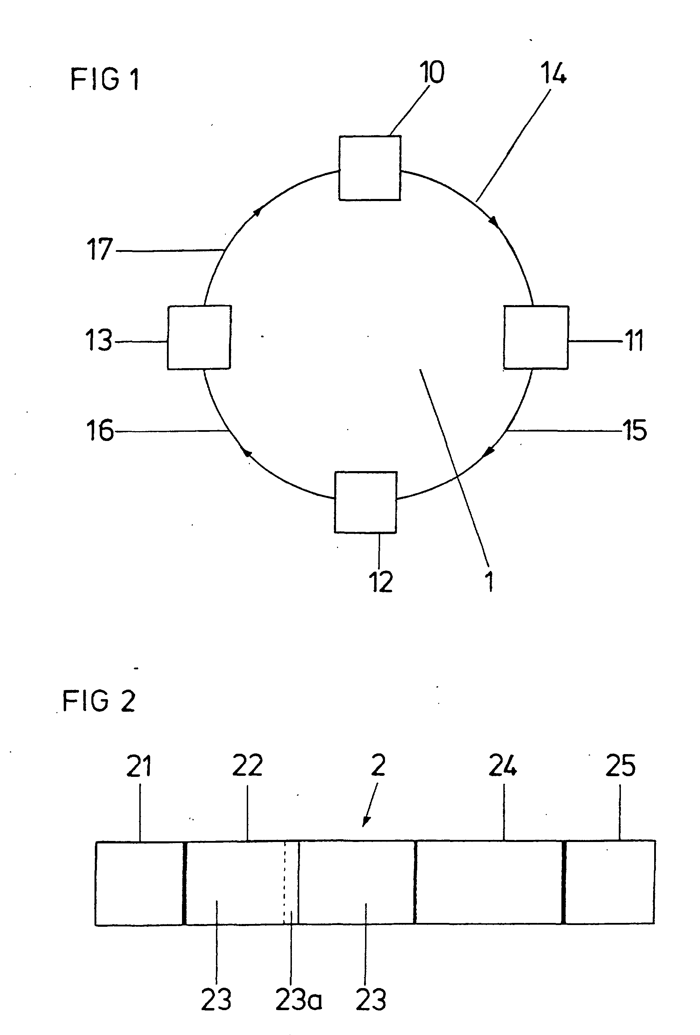

Fig. 1 zeigt ein ringförmiges Netzwerk 1, das im vorliegenden Fall als MOST-Netzwerk ausgebildet ist. Das Netzwerk 1 umfasst vier Netzwerkteilnehmer 10, 11, 12, 13, wobei einer der Teilnehmer 10 als Taktgenerator ausgebildet ist. Die vier Teilnehmer 10, 11, 12, 13 sind über unidirektional betreibbare Datenleitungen 14, 15, 16, 17 miteinander ringförmig derart verbunden, dass ein Datenstrom von einem zum anderen Teilnehmer 10, 11, 12, 13 im Uhrzeigersinn stattfinden kann. Die physikalische Richtung der Datenübertragung ist in Fig. 1 durch Pfeile auf den Datenleitungen 14, 15, 16, 17 dargestellt worden.

Fig. 2 zeigt das für das erfindungsgemäße Verfahren verwendete Datenübertragungsformat in einem ringförmigen Kommunikationsnetzwerk entsprechend Figur 1. In Fig. 2 ist mit 2 eine Bitgruppe, die auch Frame genannt wird, bezeichnet.

Im vorliegenden Ausführungsbeispiel umfasst die Bitgruppe 2 64 Bytes, das heißt 512 Bits, was ein geradzahliges Vielfaches der Längen von Bitgruppen in bekannten Übertragungsformaten für synchrone Daten ist, so dass wegen der einfachen Umwandelbarkeit Kompatibilität mit diesen Formaten gegeben ist. Die Bitgruppe 2 kann jedoch auch eine beliebig andere Bitgröße aufweisen.

Die Bitgruppe 2 enthält eine Präambel 21, die insbesondere Daten enthält, die einer PLL-Schaltung eines Netzteilnehmers das Aufsynchronisieren auf einen empfangenen Takt ermöglicht.

An die Präambel 21 schließt sich ein Datenfeld 22 für synchrone Daten an. Das Datenfeld 22 kann - muss jedoch nicht notwendigerweise - in mehrere Teilbitgruppen 23 gleicher Datenbreite, die jeweils einem bestimmten Teilnehmer zugeordnet sind, unterteilt sein. Diese Zuordnung zwischen den Teilbitgruppen 23 und den jeweiligen Teilnehmern wird typischerweise ebenfalls in der Präambel 21 festgelegt. Das Datenfeld 22 in Fig. 2 weist im vorliegenden Ausführungsbeispiel zwei Teilbitgruppen 23 auf. Mindestens eine der Teilbitgruppen 23 weist an der niedrigstwertigen Bitposition 23a eine einzelne Bitposition auf, die nachfolgend auch als LSB-Bit 23a (Least Significant Bit) bezeichnet wird. Diese einzelne Bitposition 23a kann jedoch auch an beliebig anderer Stelle der Teilbitgruppe, beispielsweise an der höchstwertigen Bitposition (MSB-Bit, Most Significant Bit), angeordnet sein.

An das Datenfeld 22 für synchrone Daten schließt sich typischerweise, jedoch nicht notwendigerweise, ein weiteres Datenfeld 24 für asynchrone Daten an. Dieses Datenfeld 24 für asynchrone Daten dient dem Zweck, eine möglichst flexible Datenübertragung, bei der die Datenbreite der zu übertragenden Daten eine variable Breite aufweist, zwischen den Teilnehmern zu ermöglichen. Dem Datenfeld 24 schließt sich ein Kontroll- und Steuerfeld 25 an, welches unter anderem Kontroll- und Steuerbits zur Steuerung der Datenübertragung aufweist.

Die in Fig. 2 dargestellte Bitgruppe 2 wurde zugunsten einer übersichtlichen Darstellung nicht maßstabsgetreu dargestellt.

Um in einem Kommunikationsnetzwerk entsprechend Figur 1 Daten zwischen der Vielzahl von miteinander verbundenen Teilnehmern 10, 11, 12, 13 übertragen zu können, kann ein Bereich innerhalb einer Bitgruppe 2, der für die Quelldaten reserviert ist, die in einem kontinuierlichen Datenstrom übertragen werden, in mehrere Teilbitgruppen 23 gleicher Länge unterteilt werden, wobei abhängig von den Steuerdaten die jeder Teilbitgruppe 23 zugewiesenen Quelldaten einem bestimmten Teilnehmer 10, 11, 12, 13 zugeordnet werden können.

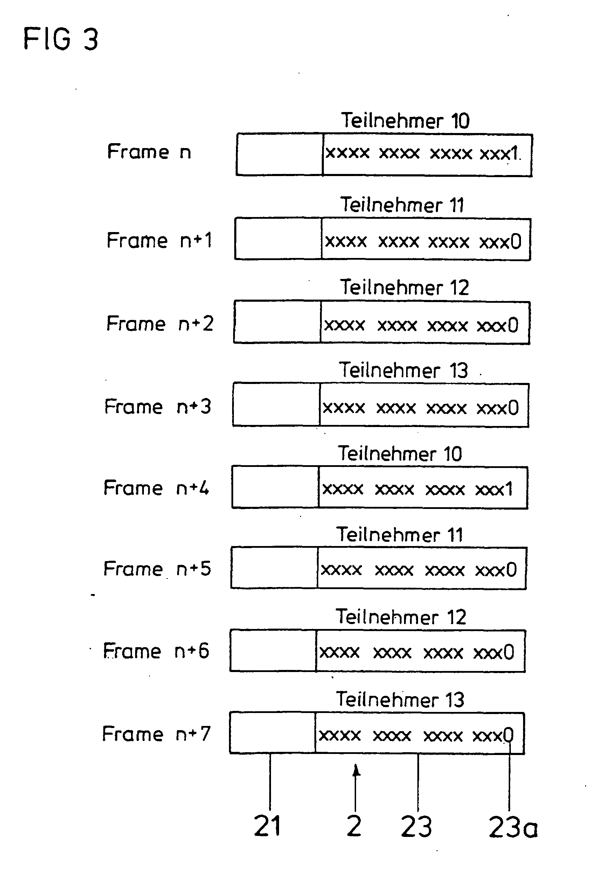

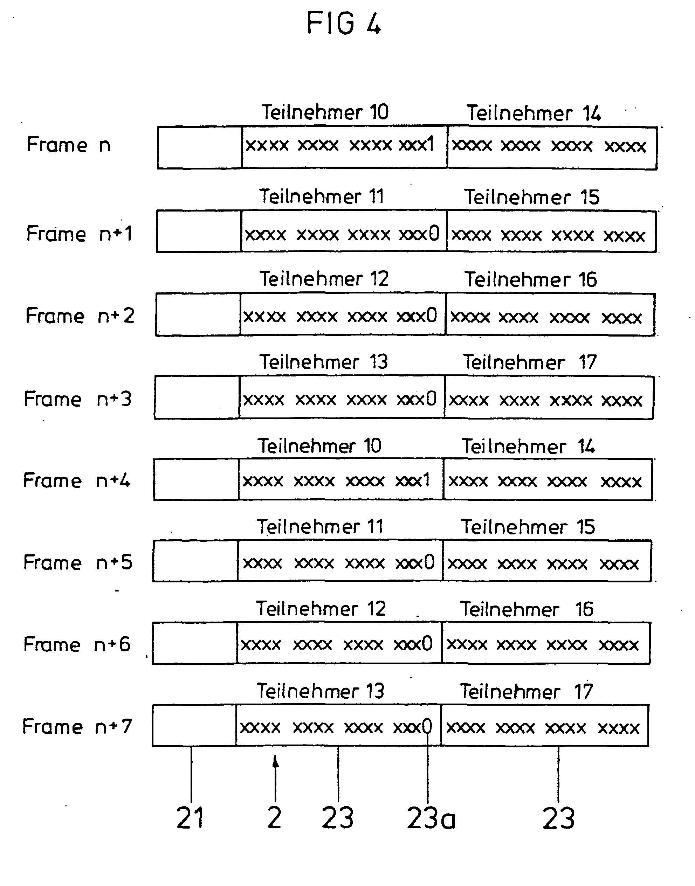

Das genaue erfindungsgemäße Verfahren zur Datenübertragung in einem Kommunikationsnetzwerk mit Ringstruktur wird nachfolgend anhand der Figuren 3 und 4 näher erläutert. Der besseren Übersichtlichkeit halber wurden die in Fig. 2 gezeigten, dem Datenfeld 22 nachgeschalteten Felder 24, 25 in Fig. 3 und 4 nicht dargestellt.

Fig. 3 zeigt anhand von acht über das Kommunikationsnetzwerk 1 nacheinander gesendeter Bitgruppen 2, dass heißt Frame n bis Frame n+7, das erfindungsgemäße Verfahren zur Datenübertragung mit vier Netzteilnehmern 10..13. Für das in Fig. 3 dargestellte Datenübertragungsverfahren wird ein Kommunikationsnetzwerk entsprechend Fig. 1 verwendet, das heißt ein Kommunikationsnetzwerk 1 mit vier angeschlossenen Teilnehmern 10..13. Die von den Teilnehmern 10..13 übertragenen Daten weisen eine Datenbreite von 16 Bit auf. Die Abtastfrequenz fl des Kommunikationsnetzwerkes 1 ist im vorliegenden Ausführungsbeispiel ungeführ viermal so hoch wie die Abtastfrequenz f2 der Teilnehmer 10..13. Da die Abtastfrequenz f2 der Teilnehmer 10..13 somit in etwa ein Viertel der Abtastfrequenz fl des Kommunikationsnetzwerkes 1 ist, können die Daten eines speziellen Teilnehmers 10 bei jeder vierten Bitgruppe 2 übertragen werden. In der Zwischenzeit können die übrigen drei Teilnehmer 11..13 auf derselben Position einer anderen Bitgruppe 2 Daten übertragen. Auf diese Weise erfolgt eine Datenübertragung effektiv in jeder der vier aufeinanderfolgenden Bitgruppen 2.

Allerdings können hier zur Datenkommunikation lediglich fünfzehn Bits verwendet werden, da hier das LSB-Bit 23a benötigt wird, um einen signifikanten Teilnehmer 10 zu kennzeichnen. Zur Kennzeichnung wird das LSB-Bit 23a bei diesem signifikanten Teilnehmer 10 auf einen hohen logischen Pegel "1" gesetzt, während das LSB-Bit 23a bei den übrigen Teilnehmern 11..13 einen entgegengesetzten, niedrigen logischen Pegel "0" aufweist. Diese Vorgehensweise stellt sichert, dass aufgrund der unidirektionalen Datenübertragung des ringförmig ausgebildeten Kommunikationsnetzwerkes 1 die einzelnen Teilnehmer 10..13 und damit die entsprechenden Daten eindeutig identifiziert werden können. Zwar wird hier für die Datenübertragung ein Bit verloren, jedoch ist dies akzeptabel, da durch das erfindungsgemäße Verfahren eine im Vergleich dazu sehr viel höhere Effizienz der Datenübertragung gewährleistet werden kann.

Darüber hinaus kann insbesondere bei der Datenübertragung von digital abgetasteten Audiosignalen, wie dies typischerweise bei den eingangs genannten MOST-Netzwerken stattfindet, auf ein einzelnes Bit bei der Datenübertragung verzichtet werden, ohne dadurch eine signifikante Qualitätseinbuße hinnehmen zu müssen.

Fig. 4 zeigt ein weiter entwickeltes Verfahren zur Datenübertragung, bei dem innerhalb einer Bitgruppe 2 neben dem 15 Bit breiten Datenfeld 23, das durch das LSB-Bit 23a gekennzeichnet ist, ein separates, zweites Datenfeld 23, das 16 Bit breit ist, übertragen wird. Das entsprechende Kommunikationsnetzwerk 1 kann in diesem Fall für bis zu acht Teilnehmer 10..17 ausgelegt sein. Für dieses zweite Datenfeld 23 ist vorteilhafterweise kein LSB-Bit 23a zur Kennzeichnung erforderlich, da aufgrund der ringförmigen Struktur des Kommunikationsnetzwerkes 1, das unidirektional betrieben wird, alle Teilnehmer 10..17 eindeutig identifizierbar sind, wenn ein einzelner Teilnehmer 10, wie bereits oben erwähnt, eindeutig identifiziert ist. In diesem Fall ist Teilnehmer 10 über das LSB-Bit 23a, welches auf "1" gesetzt ist, eindeutig identifiziert. Die übrigen Teilnehmer 11..17 des Kommunikationsnetzwerkes 1 sind damit ebenfalls eindeutig bestimmt, zum Beispiel Teilnehmer 10 zusammen mit Teilnehmer 14, Teilnehmer 11 zusammen mit Teilnehmer 15, etc. Der die Daten empfangende Teilnehmer 10..17 hat somit lediglich das Erscheinen des auf "1" gesetzte LSB-Bits 23a für den Teilnehmer 10 zu bestimmen und die entsprechenden nachfolgenden Bitgruppen 2 zu zählen, um die Daten des entsprechend gewünschten Teilnehmers 10..17 auslesen zu können.

## Patentansprüche

1. Verfahren zur gemeinsamen Datenübertragung von digitalen Quell- und Steuerdaten zwischen Datenquellen und Datensenken, die Teilnehmer (10, 11, 12, 13) eines unidirektional betriebenen Kommunikationsnetzwerkes (1) mit Ringstruktur sind,
bei dem Quell- und Steuerdaten in einem Format übertragen werden, das eine getaktete Folge von einzelnen Bitgruppen (2) gleicher Bitbreite vorschreibt, die in einem kontinuierlichen Datenstrom übertragen werden, wobei jeweils bestimmte, durch das Format vorgegebene Bitpositionen innerhalb einer jeden Bitgruppe (2), reserviert sind,
bei dem die Teilnehmer (10, 11, 12, 13) Daten jeweils mit einer ersten Abtastfrequenz bereitstellen und das Kommunikationsnetzwerk Daten mit einer zweiten Abtastfrequenz, die ein ganzzahliges Vielfaches der ersten Abtastfrequenz ist, überträgt,
bei dem innerhalb jeder Bitgruppe (2) mindestens ein zusammenhängender Bereich (23) mit einer vorgegebenen Anzahl von Bitpositionen für Quelldaten reserviert ist und der/die zusammenhängende(n) Bereich(e) jeweils einem Teilnehmer zugeordnet sind, **dadurch gekennzeichnet,**
**dass** die Teilnehmer (10, 11, 12, 13) sich bei der Benutzung des zusammenhängenden Bereichs (23) zyklisch abwechseln und
**dass** mindestens einem zusammenhängenden Bereich (23) innerhalb einer Bitgruppe (2) jeweils eine signifikante Bitposition (23a) zugeordnet ist, die bei einem der Teilnehmer (10, 11, 12, 13) auf einen ersten logischen Pegel ("1") gesetzt wird und bei allen übrigen Teilnehmern auf einen entgegengesetzten, zweiten logischen Pegel ("0") gesetzt wird.

2. Verfahren nach Anspruch 1,
**dadurch gekennzeichnet, dass** die erste Abtastfrequenz und die zweite Abtastfrequenz zu einem Taktsignal synchronisiert sind.

3. Verfahren nach einem der vorstehenden Ansprüche,
**dadurch gekennzeichnet, dass** mindestens einem Teilnehmer (10, 11, 12, 13) die zweite Abtastfrequenz eine beliebige Phasenverschiebung gegenüber der ersten Abtastfrequenz aufweist.

4. Verfahren nach einem der vorstehenden Ansprüche,
**dadurch gekennzeichnet, dass** das Vielfache der ersten Abtastfrequenz der Anzahl der Teilnehmer (10, 11, 12, 13) des Kommunikationsnetzwerkes (1) entspricht.

5. Verfahren nach einem der Ansprüche 1 bis 4,
**dadurch gekennzeichnet, dass** die Anzahl der Teilnehmer (10, 11, 12, 13) des Kommunikationsnetzwerkes (1) ein ganzzahliges Vielfaches des Vielfachen der ersten Abtastfrequenz ist.

6. Verfahren nach einem der vorstehenden Ansprüche,
**dadurch gekennzeichnet, dass** die signifikante Bitposition innerhalb des zusammenhängenden Bereiches die niedrigstwertige Bitposition (LSB-Bit) für Quelldaten ist.

7. Verfahren nach einem der vorstehenden Ansprüche,
**dadurch gekennzeichnet, dass** die Teilnehmer (10, 11, 12, 13) des Kommunikationsnetzwerkes (1) mindestens zum Teil als Mikrophoneinheiten ausgebildet sind, wobei von den zugeordneten Mikrophoneinheiten die entsprechenden analogen Audiosignale abgetastet werden und dem Kommunikationsnetzwerk (1) in Form von digitalen Signalen zugeführt werden.

8. Verwendung eines Verfahrens nach einem der vorstehenden Ansprüche,
**dadurch gekennzeichnet, dass** das Kommunikationsnetzwerk (1) als MOST-Netzwerk zur Verwendung in einem Kraftfahrzeug und/oder im Haushalt ausgebildet ist.

## Claims

1. Method of joint data transmission of digital source data and control data between data sources and data sinks which are participants (10, 11, 12, 13) in a unidirectionally operated communication network (1) with a ring structure, in which source data and control data are transmitted in a format which prescribes a clocked sequence of individual bit groups (2) having the same bit width which are transmitted in a continuous data stream, whereby in each case specific bit positions predetermined by the format are reserved within each bit group (2), in which the participants (10, 11, 12, 13) provide data in each case with a first sampling frequency and the communication network transmits data with a second sampling frequency which is an integral multiple of the first sampling frequency, in which within each bit group (2) at least one contiguous region (23) with a predetermined number of bit positions is reserved for source data and the contiguous region(s) are in each case assigned to a participant, **characterised in that** the participants (10, 11, 12, 13) alternate cyclically in the use of the contiguous region (23), and that at least one contiguous region (23) within a bit group : (2) is in each case assigned a significant bit position (23a) which in the case of one of the participants (10, 11, 12, 13) is set to a first logic level ("1") and in the case of all other participants is set to an opposed second logic level ("0").

2. Method as claimed in Claim 1, **characterised in that** the first sampling frequency and the second sampling frequency are synchronised to a clock signal.

3. Method as claimed in any one of the preceding claims, **characterised in that** in at least one participant (10, 11, 12, 13) the second sampling frequency has any desired phase shift with respect to the first sampling frequency.

4. Method as claimed in any one of the preceding claims, **characterised in that** the multiple of the first sampling frequency corresponds to the number of participants (10, 11, 12, 13) in the communication network (1).

5. Method as claimed in any one of Claims 1 to 4, **characterised in that** the number of participants (10, 11, 12, 13) in the communication network (1) is an integral multiple of the multiple of the first sampling frequency.

6. Method as claimed in any one of the preceding claims, **characterised in that** the significant bit position within the contiguous region is the least-significant bit position (LSB) for source data.

7. Method as claimed in any one of the preceding claims, **characterised in that** at least some of the participants (10, 11, 12, 13) of the communication network (1) are designed as microphone units, the corresponding analogue audio signals being sampled from the assigned microphone units and fed to the communication network (1) in the form of digital signals.

8. Use of a method as claimed in any one of the preceding claims, **characterised in that** the communication network (1) is designed as a MOST network for use in a motor vehicle and/or in the household.

## Revendications

1. Procédé pour la transmission commune de données de base et de données de commande numériques entre des sources de données et des collecteurs de données qui sont des abonnés (10, 11, 12, 13) à un réseau de communication (1) à structure annulaire, exploité de façon unidirectionnelle, dans lequel les données de base et les données de commande sont transmises dans un format qui prescrit une séquence synchronisée de groupes de bit individuels (2) d'une même largeur de bits qui sont transmis dans un flux de données continu, des positions de bits déterminées prescrites par le format étant respectivement réservées dans chaque groupe de bits (2), dans lequel les abonnés (10, 11, 12, 13) mettent à disposition des données respectivement avec une première fréquence de balayage et le réseau de communication transmet des données à une deuxième fréquence de balayage, qui est un multiple entier de la première fréquence de balayage, dans lequel au sein de chaque groupe de bits (2), au moins une région continue (23) avec un nombre prédéfini de position de bits est réservée pour des données de base et la/les région(s) continue(s) est (sont) associée(s) à respectivement un abonné, **caractérisé en ce que** les abonnés (10, 11, 12, 13) changent cycliquement lors de l'utilisation de la région continue (23) et **en ce qu'**une position de bit significative (23a), qui chez l'un des abonnés (10, 11, 12, 13) est placée sur un premier niveau logique ("1") et chez tous les autres abonnés restants est placée sur un deuxième niveau logique opposé ("0"), est associée à au moins une région continue (23) au sein d'un groupe de bits (2).

2. Procédé selon la revendication 1, **caractérisé en ce que** la première fréquence de balayage et la deuxième fréquence de balayage sont synchronisées en un signal de synchronisation.

3. Procédé selon l'une quelconque des revendications précédentes, **caractérisé en ce que** chez au moins un abonné (10, 11, 12, 13), la deuxième fréquence de balayage présente un décalage de phase quelconque par rapport à la première fréquence de balayage.

4. Procédé selon l'une quelconque des revendications précédentes, **caractérisé en ce que** le multiple de la première fréquence de balayage correspond au nombre d'abonnés (10, 11, 12, 13) au réseau de communication (1).

5. Procédé selon l'une quelconque des revendications 1 à 4, **caractérisé en ce que** le nombre d'abonnés (10, 11, 12, 13) au réseau de communication (1) est un multiple entier du multiple de la première fréquence de balayage.

6. Procédé selon une quelconque des revendications précédentes, **caractérisé en ce que** la position de bit significative au sein de la région continue est la position de bit de plus faible valeur (bit LSB) pour des données de base.

7. Procédé selon l'une quelconque des revendications précédentes, **caractérisé en ce que** les abonnés (10, 11, 12, 13) au réseau de communication (1) sont au moins partiellement conçus en tant qu'unités de microphones, les signaux audio analogiques correspondants étant balayés par les unités de microphones associées et amenés au réseau de communication (1) sous la forme de signaux numériques.

8. Utilisation d'un procédé selon l'une quelconque des revendications précédentes, **caractérisé en ce que** le réseau de communication (1) est conçu en tant qu'un réseau MOST destiné à être utilisé dans un véhicule automobile et/ou destiné à un usage domestique.
